# EUROPÄISCHE PATENTANMELDUNG

(11) **EP 1 226 764 A1**
(43) Veröffentlichungstag der Anmeldung: **31.07.2002**
(21) Anmeldenummer: 01101796.9
(22) Anmeldetag: 26.01.2001
(51) Int. Cl.: A24B 15/22

(54) **Verfahren zur Schädlingsbekämpfung**

(71) Anmelder: Kreyenberg, Heinrich, Dipl. Ing. Dr. (EC), 40885 Ratingen (DE)
(72) Erfinder: Kreyenberg, Heinrich, Dipl. Ing. Dr. (EC), 40885 Ratingen (DE)
(74) Vertreter: Stenger, Watzke & Ring Patentanwälte

(57) **Zusammenfassung**

Die Erfindung betrifft ein Verfahren zur Bekämpfung von Schädlingen bei Vorratswaren, insbesondere bei Tabakerzeugnissen, welches dadurch gekennzeichnet ist, daß die potentiell befallene Vorratsware zeitweise mit Mikrowellen behandelt wird, wobei die Behandlungsdauer und die mittlere Leistung der Mikrowellen derart aufeinander abgestimmt werden, daß sowohl der Schädling selbst als auch seine Eier abgetötet werden. Mit der vorliegenden Erfindung wird daher in vorteilhafter Weise ermöglicht, die Schädlingsbekämpfung am Befallsgut effektiv und nachhaltig durchzuführen, da neben dem Käfer und den Larven ferner die Eier des Schädlings abgetötet werden und somit eine Entwicklung von Eiern zum Larvenstadium zu einem späteren Zeitpunkt verhindert wird. Zum anderen kann mittels des erfindungsgemäßen Verfahren auf hochgiftige Chemikalien verzichtet werden, die Rückstände an den behandelten Waren zurücklassen können und somit dann eine Gesundheitsbelastung für den die jeweilige Ware Verzehrenden darstellen. Aufgrund des möglichen Verzichts auf hochgiftige Chemikalien ist das Verfahren auch sehr wirtschaftlich, da zeitaufwendige und kostenintensive Sicherheitsmaßnahmen überflüssig werden.

## Beschreibung

Die vorliegende Erfindung betrifft ein Verfahren zur Schädlingsbekämpfung bei Vorratswaren. Zu Vorratswaren gehören dabei insbesondere trockene Pflanzenstoffe, darunter Tabakwaren, Tee, Reis, Kakao, Gewürze, Drogen und Trockenfrüchte.

Bei obigen Waren ergibt sich das Problem, das diese von Vorratsschädlingen befallen werden. Zu derartigen Vorratsschädlingen gehören beispielsweise der Brotkäfer (*Stegobium paniceum*) oder der sogenannte Zigarrenkäfer *(Lasioderma serricorne*). Dabei befallen diese Vorratsschädlinge insbesondere auch Tabakwaren, wobei sie sich im fermentierten Tabak oder in der Fertigware entwickeln. Die Larven fressen Gänge in die Ware und verpuppen sich an den Blattrippen. Bei der Zigarrenherstellung ist dies ein Problem, welches beträchtliche wirtschaftliche Schädigungen zur Folge hat. Generell bieten auch Verpackungsmaterialien wenig Schutz vor Vorratsschädlingen, da die Larven selbst durch kleinste Ritzen dringen und die jeweilige Ware befallen. Neben dem wirtschaftlichen Verlust durch unbrauchbar gewordene Ware ist auch der drohende Verlust des Kundenvertrauens durch den Kauf von mit Schädlingen befallener Ware erheblich.

Daher ist man bestrebt, die Schädlinge zu vernichten. Um dies zu erreichen, werden die Vorratswaren üblicherweise mit Fumagentien begast. Fumagentien sind hochgiftige Stoffe wie beispielsweise Blausäure, Phosphorwasserstoff, Zn-, Ca-, Al-Phosphide, Methylbromid, Formaldehyd oder Ethylenoxid. Dabei wird das Befallsgut mit diesen hochgiftigen Gasen begast, was das Absterben insbesondere der Käfer und Larven zur Folge hat. Der Vorteil dieser Begasungsmittel ist, daß sie ein hohes Penetrationsvermögen aufweisen und somit nicht nur oberflächlich wirken, sondern auch Schädlinge im Inneren der Ware abtöten. Jedoch birgt dies den beträchtlichen Nachteil, daß das behandelte Befallsgut Rückstände des Begasungsmittels aufweist, die nicht nur oberflächlich sind und daher auch nicht einfach abgewaschen werden können. Diese Rückstände stellen eine Gesundheitsbelastung für den Verbraucher dar. Dies ist insbesondere bei Tabakwaren der Fall, da diese Schadstoffe über die Mundschleimhäute und in Folge der Inhalation über die Lungenoberfläche in den Körper aufgenommen werden. Zudem bedenklich ist bei den herkömmlich eingesetzten Begasungsverfahren, daß nicht nur Rohware vor der Verarbeitung begast wird, sondern auch die fertig verarbeitete Ware, welche anschließend zum Gebrauch für den Verbraucher bereitsteht. Bei Tabakerzeugnissen wie bei der Zigarre, wird nicht nur der fermentierte Tabak begast, sondern zudem die fertige Zigarre. Dabei werden bei diesem finalen Begasungsschritt hohe Mengen der hochgiftigen Gase eingesetzt, um sicherzustellen, daß das fertige Produkt frei von Schädlingen ist und der Verbraucher keine beschädigte Ware erhält. Dabei verbleiben jedoch Rückstände der hochgiftigen Gase am fertigen Produkt.

Neben den Gesundheitsbelastungen für den Verbraucher birgt das herkömmliche Verfahren zur Schädlingsbekämpfung den Nachteil, daß neben den Käfern zumeist nur die bereits geschlüpften Larven vernichtet werden und die Eier aufgrund der Begasung oftmals nicht absterben. Daher bleibt die Gefahr, daß Larven aus den die Begasung überlebenden Eiern in der fertigen Ware schlüpfen und diese verderben, was wiederum die oben genannte unerwünschte Beschädigung der Ware und den möglichen Vertrauensverlust des Kunden zur Folge hat.

Auch hat das herkömmliche Verfahren den Nachteil, daß besondere Sicherheitsvorkehrungen beim Umgang mit Fumagentien und insbesondere beim Umgang mit Phosphorwasserstoff und Blausäure beachtet werden müssen, um eine Gefährdung der Arbeiter zu vermeiden, da diese Stoffe nicht nur hochgiftig sind, sondern auch explosive Gemische bilden können. Daher sind bei der Lagerung der Fumagentien und beim Umgang mit diesen strenge Sicherheitsbedingungen zu beachten, was neben der erhöhten Gefahr für das Arbeitspersonal und die daraus resultierende erforderliche Umsicht auch einen erhöhten Kostenaufwand birgt. Gemäß der Gefahrenstoffverordnung und der diesbezüglichen technischen Regeln dürfen derartige Begasungsmittel aufgrund ihrer Gefährlichkeit nur an Firmen abgegeben werden, die eine Erlaubnis für diese Stoffe aufweisen, wobei die Anwendung nur von Befähigungsscheininhabern oder Sachkundigen vorgenommen werden darf.

Dabei ist die Begasung an sich sehr aufwendig. Die Begasung umfaßt im wesentlichen fünf Arbeitsschritte, die je nach Größe des zu begasenden Objekts Tage bis Monate beanspruchen können. Dabei sind jeweils Gaskonzentrationsmessungen beim Einbringen des Begasungsmittels, bei der Überwachung der Begasung, bei der Lüftung und bei den Freigabearbeiten durchzuführen. Dabei dürfen die mit den chemischen Mitteln behandelten Objekte erst dann freigegeben werden, wenn bestimmte Konzentrationswerte unterschritten sind. Dies führt dazu, daß die genauen Zeiträume der Begasung nicht immer planbar sind und unter Umständen Lieferungsschwierigkeiten auftreten können. Auch müssen für die Waren bis diese die jeweils erlaubte Konzentration unterschritten haben, geeignete Lagerkapazitäten zur Verfügung gestellt werden.

Insgesamt ist mit den herkömmlichen für die Bekämpfung von Vorratswaren eingesetzten Begasungsverfahren ein immenser Zeit und Kostenaufwand verbunden, der sich nachteilig auf die Produktivität einer Verarbeitungsanlage auswirkt. Darüber hinaus stellen diese Mittel ein erhebliches Gesundheitsrisiko für das Arbeitspersonal und den Verbraucher dar. Auch ist die Umweltbelastung durch die hochgiftigen Chemikalien, welche teilweise wie Brommethan zusätzlich die Ozonschicht schädigen, außerordentlich nachteilig.

Ein weiteres Verfahren zur Bekämpfung von Vorratsschädlingen, welches aufgrund seiner Risiken nur in bestimmten Ländern angewandt werden darf, nutzt Gammastrahlen, um sich der Schädlinge zu entledigen. Auch hierbei sind die Gesundheitsrisiken sowohl für das Arbeitspersonal als auch für den Verbraucher beachtlich, da es neben der erhöhten Strahlenbelastung zu carcinogenen Radikalbildungen in der Ware kommen kann.

Daher liegt der Erfindung die **Aufgabe** zu Grunde, ein einfach durchführbares Verfahren zur Bekämpfung von Schädlingen bei Vorratswaren bereitzustellen, welches den Stand der Technik dahingehend verbessert, daß bei effektiver Schädlingsbekämpfung keine die Gesundheit belastenden Stoffe eingesetzt werden.

Die Aufgabe ist erfindungsgemäß dadurch **gelöst**, daß das Befallsgut wenigstens zeitweise mit Mikrowellen behandelt wird, wobei die Behandlungsdauer und die mittlere Leistung der Mikrowellen derart aufeinander abgestimmt werden, daß sowohl der Schädling selbst als auch seine Eier abgetötet werden.

Mit dem erfindungsgemäßen Verfahren werden die aus dem Stand der Technik bekannten Nachteile in überraschender Weise vermieden. So ermöglicht es die vorliegende Erfindung, daß auf die herkömmlich eingesetzte Begasung oder Gammastrahlenbehandlung zur Schädlingsbekämpfung verzichtet werden kann. Dadurch werden in vorteilhafter Weise die oben genannten Nachteile dieser Behandlungen umgangen.

So ist der erfindungsgemäße Einsatz von Mikrowellen bei effektiverer Vernichtung des Schädlings und seiner Eier sowohl unschädlich für den Endverbraucher, als auch für das an der Herstellung des jeweiligen Produkts beteiligte Arbeitspersonal. Bei Verwendung des erfindungsgemäßen Verfahrens bleiben keine gesundheitsschädlichen Rückstände aufgrund verwendeter Chemikalien an der Ware, so daß der Verbraucher sicher sein kann, daß er keine derartigen gesundheitsgefährdenden Stoffe mit der Ware zu sich nimmt. Auch entfällt bei der Behandlung der Umgang mit hochgiftigen Chemikalien, was vorteilhaft in Bezug auf die Arbeitssicherheit ist. Auf aufwendige und teure Sicherheitsvorkehrungen beim Umgang und bei der Lagerung von herkömmlich eingesetzten hochgiftigen Chemikalien kann verzichtet werden, was der Wirtschaftlichkeit des erfindungsgemäßen Verfahrens zuträglich ist. Auch sind wesentlich weniger Arbeitsschritte erforderlich, was die Produktivität steigert. Neben der vorteilhaften Einsparung an Arbeitsschritten ist auch zu berücksichtigen, daß die Ware direkt weiter verarbeitet werden kann und nicht erst solange gelagert werden muß, bis bestimmte Konzentrationswerte an Giftstoffen unterschritten sind. Dies hat zur Folge, daß die Weiterverwendung der Ware im Vorfeld ohne Unsicherheitsparameter in Bezug auf die Schädlingsbekämpfung planbar ist, was bei dem herkömmlichen Begasungsverfahren nicht möglich ist.

Neben der vorteilhaften Kosteneinsparung aufgrund nunmehr überflüssiger Sicherheitsvorkehrungen und entfallenden Lagerkapazitäten ist das erfindungsgemäße Verfahren wesentlich umweltschonender als die herkömmlichen Techniken, da keine umweltbelastenden Chemikalien oder Strahlungen zum Einsatz kommen. Dabei ist der mit dem erfindungsgemäßen Verfahren mögliche Verzicht auf Chemikalien nicht nur hinsichtlich der allgemein angestrebten Reduzierung von Chemikalien bei der Bekämpfung von Schädlingen im Hinblick auf nachteilige Umweltbelastungen von Vorteil, der Verzicht auf die Chemikalien ist auch dahingehend außerordentlich vorteilhaft, daß der Verbraucher vor unnötigen Gesundheitsbelastungen aufgrund giftiger Chemikalien bewahrt wird. Dies ist insbesondere vor dem immer kritischer werdenden Bewußtseins des Verbrauchers gegenüber derartigen Substanzen auch von großem wirtschaftlichen Vorteil, da der Verzicht auf gesundheitsschädliche Chemikalien werbewirksam genutzt werden kann.

Bei dem erfindungsgemäßen Verfahren werden die Behandlungsdauer und die mittlere Leistung der eingesetzten Mikrowellen derart aufeinander abgestimmt, daß sowohl der Vorratsschädling selbst als auch seine Eier abgetötet werden. Unter dem Begriff Schädling wird dabei sowohl der Käfer als auch seine Larve verstanden, welche die Schädigungen an der Vorratsware durch das Graben von Gängen verursacht. Mit dem erfindungsgemäßen Verfahren werden nicht nur der Schädling, also der Käfer und die Larve, sondern zusätzlich auch seine Eier abgetötet, welche oftmals gegenüber den herkömmlichen Begasungsverfahren resistent sind. Aufgrund der Abtötung der Eier wird sichergestellt, daß beim Transport und/oder bei der Lagerung der Ware keine Larven aus überlebenden Eiern schlüpfen und in Folge dessen die Ware beschädigt wird. Daher wird durch das erfindungsgemäße Verfahren die Gefahr eines wirtschaftlichen Schadens durch Schädlinge minimiert, da die Ware aufgrund der Abtötung der Eier langfristig von dem Schädling befreit wird. Höhere Qualitätsstandards können gegenüber dem Händler und gegenüber dem Kunden gewährleistet werden.

Ferner ist möglich, die Dauer und Intensität der Mikrowellenbehandlung so zu variieren, daß sie in vorteilhafter Weise auch an verschiedene, die jeweilige Vorratsware befallende Schädlinge angepaßt werden kann und die Schädlinge somit effektiv vernichtet werden können. Auch ist dabei möglich, das Verfahren so zu steuern, daß die mittlere Leistung der Mikrowellenbestrahlung und die Behandlungsdauer so aufeinander abgestimmt werden, daß die Schädlinge zwar effektiv abgetötet werden, die Vorratsware aber unbeschädigt bleibt. Die unterschiedlichen Eigenschaften und Sensitivitäten der verschiedenen Vorratswaren gegenüber Bestrahlungsintensitäten und gegenüber der Bestrahlungsdauer können so berücksichtigt werden. Daher können mit dem erfindungsgemäßen Verfahren die unterschiedlichsten Waren, die von Vorratsschädlingen befallen werden und herkömmlicher Weise begast oder bestrahlt werden, mit dem Verfahren effektiv und umweltschonend gegen die jeweiligen Vorratsschädlinge behandelt werden.

Der erfindungsgemäße Einsatz von Mikrowellen bei der Schädlingsbekämpfung ist auch dahingehend von Vorteil, daß das Verfahren so geführt werden kann, daß die Ware nicht beschädigt wird und keine Rückstände von der Behandlung an der Ware verbleiben. So hat der Einsatz von Mikrowellen den Vorteil, daß die Behandlung nur für einen relativ kurzen Zeitraum erfolgen muß, um das Material effektiv gegen Schädlinge zu behandeln, da der Einsatz von Mikrowellen eine vorteilhafte Energiebündelung bewirkt. Die Mikrowellenbehandlung führt zu einer Denaturierung der Proteine in den Zellen des Schädlings, was ein Absterben des Vorratsschädlings in all seinen Entwicklungsstadien zur Folge hat. Auf langwierige Heizphasen, welche die jeweilige Vorratsware durch die langanhaltenden hohen Temperaturen schädigen könnten, kann verzichtet werden. Mittels des erfindungsgemäßen Verfahrens ist eine gleichmäßige Erwärmung der Ware möglich und es kann auf eine Kontakterwärmung verzichtet werden, welche zur Folge haben könnte, daß die Ware angesengt wird, wie es beispielsweise bei dem Einsatz einer Heizplatte die Folge sein könnte. Dadurch wird ferner auch ein insbesondere bei der Tabakherstellung nachteiliges Austrocknen der Ware verhindert. Auch werden Spuren der Behandlung, wie beispielsweise angesengte Stellen, auf der Ware vermieden, was der attraktiven Optik der Ware zuträglich ist.

Gemäß einer vorteilhaften Weiterbildung der vorliegenden Erfindung wird die potentiell befallene Ware nur kurzzeitig mit Mikrowellen behandelt. So liegt die Dauer der Mikrowelleneinwirkung vorzugsweise unterhalb einer Minute bei ca. 200-1200W, vorzugsweise bei 700W. Dabei ist die Behandlungsdauer auch an die jeweiligen Menge der Ware anzupassen. Die Mikrowellenbehandlung für einen kurzen Zeitraum durchzuführen, ist besonders schonend für die Vorratsware. Dadurch werden Qualitätsmängel an der Ware umgangen und der Geschmack, das Aroma und das Aussehen der Ware bleibt durch die Bestrahlung unbeeinflußt. Um größere Mengeneinheiten effektiv zu bestrahlen, können diese beispielsweise mittels Fördermitteln durch den eigentlichen Bestrahlungsbereich durchgeführt werden.

Für die Behandlung von insbesondere bei der Zigarrenherstellung verwendetem Tabak hat sich eine Behandlungsdauer von 10 bis 15 sec bei ca. 700W als ausreichend erwiesen, sofern kleine Mengeneinheiten, wie beispielsweise eine Zigarrenkiste bestrahlt wurden. Diese kurze Behandlungsdauer von wenigen Sekunden führt dabei zu einer effektiven Abtötung der Eier und Larven des Zigarrenkäfers, hat jedoch keine nachteiligen Auswirkungen auf die Qualität der Tabakware. Die kurzen Behandlungszeiträume bedingen ferner den Vorteil, daß die durch das Verfahren mögliche effektive und anhaltende Schädlingsbekämpfung nur wenig Zeit bei der Herstellung des fertigen Produkts erfordert. Durch die vorteilhafte Zeiteinsparung kann die Produktionskapazität einer Herstellungsanlage z.B. für Zigarren erheblich gesteigert werden, da die Schädlingsbekämpfung nun nicht mehr unvorteilhaft lange Zeiträume von bis zu mehreren Tagen bis Monaten in Anspruch nimmt.

Gemäß einer vorteilhaften Weiterbildung der vorliegenden Erfindung wird vorgeschlagen, ferner die Mikrowellenfrequenz an die erforderliche Eindringtiefe der Mikrowellen in die Ware anzupassen. Dabei werden Mikrowellenfrequenzen in einem Bereich von ca. 2 bis 20 GHz, vorzugsweise 2 bis 5 GHz, eingesetzt. Dadurch kann die Bestrahlung an die jeweilige Vorratsware selbst, sowie an die Zustandsform der Vorratsware angepaßt werden. So wird einerseits die Bestrahlungsdauer und die Intensität an die jeweilige Ware sowie an den abzutötenden Schädling angepaßt, zum anderen kann ferner die Mikrowellenfrequenz an die erforderliche Eindringtiefe der Mikrowellen angepaßt werden. So kann diese an die Beschaffenheit der jeweiligen Ware angepaßt werden und auch an die Zustandsform. So kann diese im vorliegenden Fall daran angepaßt werden, ob der Tabak in Blattform bzw. in geschnittener Form bestrahlt wird oder die fertige Zigarre selbst bestrahlt wird.

Ferner wird gemäß einer Weiterbildung der vorliegenden Erfindung vorgeschlagen, daß wenigstens ein Sensor verwendet wird, welcher die in der Ware erzeugte Temperatur und/oder einwirkende Strahlung kontinuierlich mißt, wobei die Behandlungstemperaturen und/oder Strahlungsintensitäten automatisch Referenzwerten angepaßt werden, welche in einem Datenspeicher vorgebbar sind. So können diese beispielsweise in einen Datenspeicher einer Steuereinheit eingegeben werden. Während der Bestrahlung mißt dabei der Sensor die relevanten Bedingungen des Befallsgutes und übermittelt diese an die Steuereinheit, welche automatisch einen Vergleich zwischen den vom Sensor gemessenen Ist-Werten und den im Datenspeicher vorgegebenen Referenzwerten als Soll-Werten durchführt und die Bestrahlungsbedingungen derart anpaßt, daß die Ist-Werte im wesentlichen den Soll-Werten entsprechen. Dadurch wird gewährleistet, daß zum einen die für die Abtötung der Schädlinge notwendigen Parameter eingehalten werden und zum anderen keine Grenzwerte überschritten werden, wobei eine Überschreitung möglicherweise zu einer Beschädigung der Ware führen könnte. Auch kann die Ware durch Bewegungsmittel geschüttelt oder durchwirbelt werden, um so sicher zu stellen, daß die Ware optimal bestrahlt wird. Auch ist ferner eine Steuerung der Behandlungsdauer möglich. Es wird in vorteilhafter Weise ermöglicht, die auf die Ware einwirkenden Bedingungen genau zu kontrollieren und die sachgemäße Behandlung der Ware bei effektiver Abtötung der Schädlinge zu gewährleisten. Es wird eine Art Kontrollfunktion eingeführt, die zu lange oder zu intensive Bestrahlungen und somit eine Beschädigung der jeweiligen Ware verhindert.

Gemäß einem weiteren Vorschlag kann die Bekämpfung der Schädlinge entweder vor und/oder beim Verarbeiten der Vorratsware erfolgen oder aber beim fertigen Erzeugnis selbst. Ferner ist auch denkbar, daß bei bestimmten Waren oder Vorratsschädlingen die Behandlung mit Mikrowellen sicherheitshalber sowohl bei der Verarbeitung der Ware als auch beim fertigen Produkt durchgeführt wird, um einen Schädlingsbefall bei der fertigen Ware auszuschließen. So ist bei der Herstellung von Tabakerzeugnissen beispielsweise möglich, den fermentierten Tabak und/oder das fertige Produkt, wie beispielsweise eine Zigarre, mit Mikrowellen zu bestrahlen. Die Behandlung des fertigen Produkts mittels Mikrowellen ist einfach durchführbar und erspart in vorteilhafter Weise den finalen Begasungsschritt, bei dem bei den herkömmlichen Verfahren große Mengen der hochgiftigen Begasungsmittel eingesetzt werden. Daher ist das erfindungsgemäße Verfahren besonders geeignet, diesen finalen Begasungsschritt, bei welchem Rückstände der giftigen Begasungsmittel an der Ware verbleiben können, zu umgehen und auf die hochgiftigen Fumagentien zu verzichten. Die Behandlung des fertigen Produkts nach dem erfindungsgemäßen Verfahren ist einfach und bereits bestehende Betriebe können ohne größeren Aufwand adaptiert werden, so daß ermöglicht wird, diesen finalen Begasungsschritt einzusparen, was einen erheblichen Vorteil gegenüber den herkömmlichen Verfahren darstellt und vorteilhaft für den Verbraucher ist, da die Ware weniger belastet ist.

Gemäß einer vorteilhaften Weiterbildung der vorliegenden Erfindung wird ferner vorgeschlagen, die Vorratsware im Anschluß an die Mikrowellenbehandlung unterhalb der Gefriertemperatur schockzufrieren. Dabei wird die Ware bei ca. - 10 °C bis ca. - 40°C, vorzugsweise bei - 25°C schockgefroren. Kälte in diesen Temperaturbereichen führt zu einer effektiven Abtötung des Schädlings. Sie bewirken, daß das flüssige Cytosol in den Zellen der Schädlinge gefriert, wobei sich Eiskristalle in der Zelle bilden und diese abstirbt. Diese Behandlung begünstigt daher in vorteilhafter Weise die Schädlingsbekämpfung. Sie kann daher als zusätzliche Sicherheitsmaßnahme in Kombination mit der Mikrowellenbestrahlung angewendet werden, um zu gewährleisten, daß die Ware frei von Schädlingen ist und bleibt. Ferner konserviert die Kältebehandlung in vorteilhafter Weise die Feuchtigkeit, den Geschmack und das Aroma der jeweiligen Vorratsware. Diese Vorgehensweise ist insbesondere dann vorteilhaft, wenn die Behandlung nach dem erfindungsgemäßen Verfahren an der fertig verarbeiteten Ware erfolgt. Durch die Schockfrierung wird die fertige Ware direkt gekühlt und kann in diesem Zustand beispielsweise auch transportiert oder gelagert werden. Die Lagerung in diesem Zustand hat neben der Abtötung des Schädlings in all seinen Entwicklungsstufen den Vorteil, daß der Feuchtigkeitsgehalt in beispielsweise Tabakerzeugnissen im wesentlichen konstant bleibt und Austrocknungen des Tabaks vermieden werden.

Der Transport und/oder die Lagerung bei diesen Temperaturen verhindert ferner einen Neubefall der Ware durch Schädlinge beim Transport oder der Lagerung.

Gemäß einer vorteilhaften Weiterbildung wird ferner vorgeschlagen, daß die Dauer und die Temperatur der Schockfrierung aufeinander abgestimmt werden und die Parameter an die jeweilige Vorratsware angepaßt werden. Dadurch wird in vorteilhafter Weise ermöglicht, die Temperaturen und die Dauer der Kühlung an die jeweils zu behandelnde Vorratsware anzupassen, so daß Beschädigungen an dieser vermieden werden.

Gemäß einem weiteren Vorschlag erfolgt die Schockfrierung für einen Zeitraum von ca. 24h bis 72h. In dieser Zeitspanne werden die Vorratsschädlinge effektiv abgetötet, so daß er ausreichend ist, um die Schockfrierung als zusätzliche Sicherheitsmaßnahme zu der Mikrowellenbehandlung anzuwenden.

Nachfolgend wird vorliegende Erfindung anhand eines Ausführungsbeispiels näher erläutert. Dieses dient ausschließlich der näheren Erläuterung und ist nicht beschränkend. Dabei bezieht sich das vorliegende Beispiel auf den Einsatz des erfindungsgemäßen Verfahrens bei der Bekämpfung des Zigarrenkäfers im Tabak bei der Herstellung von Zigarren. Dabei wird die fertige Zigarre gegen Schädlinge behandelt.

Die potentiell mit Schädlingen befallenen Zigarren werden im Anschluß an Ihre Herstellung mit Mikrowellen bestrahlt, um sowohl Käfer, Larven und Eier des Vorratsschädlings, im vorliegenden Beispiel des Zigarrenkäfers *(Lasioderma serricorne),* abzutöten. Bei der Bestrahlung der Zigarren werden unterschiedliche Parameter berücksichtigt. So wird die Behandlungsdauer und die mittlere Leistung der Mikrowellen so abgestimmt, daß sie zum einen den Schädling und seine Eier abtöten, zum anderen jedoch die Tabakware an sich unbeeinflußt lassen. Dabei können diese Parameter im Vorfeld an die Behandlung gewählt und eingestellt werden. Auch ist die jeweils zu bestrahlende Menge zu berücksichtigen. Dabei werden die relevanten Daten wie erlaubte Bestrahlungsdauer, Intensität, Temperatur o.ä. als Referenzwerte in einem Datenspeicher einer Steuereinheit vorgegeben. Dabei wird die Bestrahlung für einen Zeitraum von nur ca. 15 bis 20 Sekunden bei 600 W bis 900 W, vorzugsweise bei 700 W durchgeführt. Durch die Kürze der Bestrahlung ist das Verfahren besonders schonend für den Tabak. Dadurch werden nachteilige übermäßige Austrocknungen des Tabaks verhindert.

Im Anschluß an die Bestrahlung wird die fertige Zigarre für ca. 72h bei ungefähr -25°C schockgefroren. Dabei dient diese Schockfrierung als zusätzliche Vorratsschädlingsbekämpfungsmaßnahme. Dabei kann die Zigarre in diesem Zustand transportiert werden, so daß keine zusätzlichen Lagerkapazitäten für die gekühlten Zigarren erforderlich sind. Später werden die Zigarren langsam aufgetaut. Die so behandelte Zigarre zeichnet sich durch ein Aroma aus, welches in keiner Weise durch die Behandlung beeinträchtigt ist und ferner weist sie keine Rückstände von Schädlingsbekämpfungschemikalien auf, was vorteilhaft in Bezug auf die Gesundheit des Verbrauchers ist.

Das erfindungsgemäße Verfahren findet weitreichende Anwendungsmöglichkeiten bei der Schädlingsbekämpfung. Dabei hat es sich insbesondere für die Bekämpfung des Zigarrenkäfers (*Lasioderma serricorne)* bewährt, welcher die unterschiedlichsten Vorratswaren wie Tabakwaren, Gewürze, Drogen und Trockenfrüchte befällt. Dabei hat sich die Anwendung bei Tabak als sehr effektiv erwiesen; das erfindungsgemäße Verfahren kann aber auch darüber hinaus für andere Vorratswaren und gegen andere Vorratsschädlinge angewendet werden. Aufgrund des geringen Kosten und Müheaufwandes bei der Bekämpfung der Schädlinge, werden mit dem erfindungsgemäßen Verfahren sowohl Zeit als auch Kosten bei der Bekämpfung eingespart und die Schädlinge werden effektiver und umweltschonender als mit den herkömmlichen Methoden vernichtet, was vorteilhaft für den Verbraucher ist, da die Ware unverändert belassen bleibt und keine gesundheitsbelastenden Rückstände von Chemikalien an der Ware zurückbleiben.

## Patentansprüche

1. Verfahren zur Schädlingsbekämpfung bei Vorratswaren, insbesondere bei Tabakerzeugnissen,
**dadurch gekennzeichnet,**
**daß** die potentiell befallene Vorratsware zeitweise mit Mikrowellen behandelt wird, wobei die Behandlungsdauer und die mittlere Leistung der Mikrowellen derart aufeinander abgestimmt werden, daß sowohl der Schädling selbst als auch seine Eier abgetötet werden.

2. Verfahren nach Anspruch 1, **dadurch gekennzeichnet, daß** das Befallsgut für einen Zeitraum von unter 1min mit Mikrowellen bei ca. 200 W bis 1200 W, vorzugsweise bei 700 W, behandelt wird, wobei diese Parameter der jeweils zu bestrahlenden Befallsgutmenge angepaßt werden.

3. Verfahren nach einem der Ansprüche 1 oder 2, **dadurch gekennzeichnet, daß** das potentiell befallene Tabakerzeugnis für 10 bis 15 sec mit Mikrowellen bestrahlt wird.

4. Verfahren nach einem oder mehreren der Ansprüche 1 bis 3, **dadurch gekennzeichnet, daß** die verwendete Mikrowellenfrequenz an die erforderliche Eindringtiefe der Mikrowellen in die Ware angepaßt wird, wobei Mikrowellenfrequenzen in einem Bereich von 2 bis 20 GHz, vorzugsweise 2 bis 5 GHz, eingesetzt werden.

5. Verfahren nach einem oder mehreren der Ansprüche 1 bis 4, **dadurch gekennzeichnet, daß** wenigstens ein Sensor die auf die Ware einwirkende Temperatur und/oder Strahlung kontinuierlich mißt, wobei die Behandlungstemperaturen und/oder Strahlungsintensitäten automatisch an in einem Datenspeicher vorgebbare Referenzwerte angepaßt werden.

6. Verfahren nach einem oder mehreren der Ansprüche 1 bis 5, **dadurch gekennzeichnet, daß** die Behandlungsdauer, Temperatur und die mittlere Leistung der Mikrowellen derart aufeinander abgestimmt werden, daß sowohl der Schädling selbst als auch seine Eier abgetötet werden, die Vorratsware selbst jedoch nicht beschädigt wird.

7. Verfahren nach einem oder mehreren der Ansprüche 1 bis 6, **dadurch gekennzeichnet, daß** die Bekämpfung von Schädlingen vor und/oder beim Verarbeiten der Rohware erfolgt.

8. Verfahren nach einem oder mehreren der Ansprüche 1 bis 6, **dadurch gekennzeichnet, daß** die Bekämpfung von Schädlingen am fertigen Erzeugnis erfolgt.

9. Verfahren nach einem oder mehreren der Ansprüche 1 bis 8, **dadurch gekennzeichnet, daß** die Vorratsware im Anschluß an die Mikrowellenbehandlung bei wenigstens - 10°C bis -40°C, vorzugsweise bei -25°C, schockgefroren wird.

10. Verfahren nach einem oder mehreren der Ansprüche 1 bis 9, **dadurch gekennzeichnet, daß** Dauer und Temperatur der Schockfrierung aufeinander abgestimmt werden und der jeweiligen Vorratsware angepaßt werden.

11. Verfahren nach einem oder mehreren der Ansprüche 1 bis 10, **dadurch gekennzeichnet, daß** die Schockfrierung für einen Zeitraum von bis zu 72h erfolgt.
